# EUROPEAN PATENT APPLICATION

(11) **EP 4 645 996 A1**
(43) Date of publication of application: **05.11.2025**
(21) Application number: 23909204.2
(22) Date of filing: 18.08.2023
(51) Int. Cl.: H04W 72/232

(54) **BEAM INDICATION METHOD, APPARATUS, AND DEVICE**

(30) Priority: 30.12.2022 CN 202211741675
(71) Applicant: Datang Mobile Communications Equipment Co., Ltd., Beijing 100085 (CN)
(72) Inventor: WANG, Da, Beijing 100085 (CN); GAO, Qiubin, Beijing 100085 (CN)
(74) Representative: Studio Torta S.p.A.
(86) International application number: PCT/CN2023/113795
(87) International publication number: WO 2024/139264

(57) **Abstract**

The present disclosure provides a beam indication method, an apparatus, and a device. The method is applied to a network device, and comprises: determining a target beam at a first moment; and sending beam indication information to a terminal according to the target beam at the first moment, wherein the beam indication information is used for indicating to perform signal transmission on the basis of the target beam from a second moment, and the second moment is not later than the first moment.

## Description

### CROSS-REFERENCES TO RELATED APPLICATIONS

The present application claims priority to Chinese Patent Application No. 202211741675.2 filed on December 30, 2022, entitled "Beam Indication Method, Apparatus, and Device", which is hereby incorporated by reference in its entirety.

### FIELD

The present application relates to the field of communications, and in particular, to methods and apparatuses for beam indication, and devices.

### BACKGROUND

A new radio (NR) beam management scenario includes uplink beam management and downlink beam management. Through beam management, a beam with best receiving performance may be selected for subsequent data transmission between a network device and a terminal.

Traditionally, the network device or the terminal may predict a best beam at a certain time in the future, so that the network device or the terminal may know the best beam in advance, improving scheduling performance.

However, after determining the best beam at the certain time in the future, it takes a certain effective time for the network device to indicate the terminal of the best beam, resulting in a mismatch between the effective time of the best beam and a predicted time, causing performance loss.

### BRIEF SUMMARY

The present application provides methods and apparatuses for beam indication, and devices to solve a problem of performance loss caused by a mismatch between an effective time and a predicted time of a predicted best beam.

The present application provides a method for beam indication, performed by a network device, including:
determining a target beam of a first time; and
transmitting beam indication information to a terminal based on the target beam of the first time, where the beam indication information is used to indicate to perform, based on the target beam, signal transmission from a second time, and the second time is no later than the first time.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and transmitting the beam indication information to the terminal based on the target beam of the first time includes:
determining an effective duration required to indicate the target beam; and
based on the effective duration and the target beam of the first time, transmitting the beam indication information to the terminal at a third time, where the third time is earlier than the first time, and a duration between the third time and the first time is the effective duration.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

The present application provides a method for beam indication, performed by a terminal, including:
receiving beam indication information transmitted from a network device, where the beam indication information is used to indicate to perform, based on a target beam, signal transmission from a second time; and
based on the beam indication information, performing signal transmission based on the target beam from the second time, where the second time is no later than a first time of the target beam.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and receiving the beam indication information transmitted from the network device includes:
receiving the beam indication information transmitted from the network device at a third time, where the third time is earlier than the first time, and a duration between the third time and the first time is an effective duration required to indicate the target beam.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

The present application provides a network device, including a memory, a transceiver, and a processor, where
the memory is used for storing a computer program; the transceiver is used for transmitting and receiving data under control of the processor; and the processor is used for reading the computer program stored in the memory and performing the following operations:
determining a target beam of a first time; and
transmitting beam indication information to a terminal based on the target beam of the first time, where the beam indication information is used to indicate to perform, based on the target beam, signal transmission from a second time, and the second time is no later than the first time.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and transmitting the beam indication information to the terminal based on the target beam of the first time includes:
determining an effective duration required to indicate the target beam; and
based on the effective duration and the target beam of the first time, transmitting the beam indication information to the terminal at a third time, where the third time is earlier than the first time, and a duration between the third time and the first time is the effective duration.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

The present application provides a terminal, including a memory, a transceiver, and a processor, where
the memory is used for storing a computer program; the transceiver is used for transmitting and receiving data under control of the processor; and the processor is used for reading the computer program stored in the memory and performing the following operations:
receiving beam indication information transmitted from a network device, where the beam indication information is used to indicate to perform, based on a target beam, signal transmission from a second time; and
based on the beam indication information, performing signal transmission based on the target beam from the second time, where the second time is no later than a first time of the target beam.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and receiving the beam indication information transmitted from the network device includes:
receiving the beam indication information transmitted from the network device at a third time, where the third time is earlier than the first time, and a duration between the third time and the first time is an effective duration required to indicate the target beam.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

The present application provides an apparatus for beam indication, including:
a determining module, used for determining a target beam of a first time; and
a transmitting module, used for transmitting beam indication information to a terminal based on the target beam of the first time, where the beam indication information is used to indicate to perform, based on the target beam, signal transmission from a second time, and the second time is no later than the first time.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; the transmitting module is further used for:
determining an effective duration required to indicate the target beam; and
based on the effective duration and the target beam of the first time, transmitting the beam indication information to the terminal at a third time, where the third time is earlier than the first time, and a duration between the third time and the first time is the effective duration.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

The present application provides an apparatus for beam indication, including:
a receiving module, used for receiving beam indication information transmitted from a network device, where the beam indication information is used to indicate to perform, based on a target beam, signal transmission from a second time; and
a processing module, used for, based on the beam indication information, performing signal transmission based on the target beam from the second time, where the second time is no later than a first time of the target beam.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and the receiving module is further used for:
receiving the beam indication information transmitted from the network device at a third time, where the third time is earlier than the first time, and a duration between the third time and the first time is an effective duration required to indicate the target beam.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

The present application provides a computer-readable storage medium storing a computer program, where the computer program is used to cause a computer to perform any of the methods for beam indication described above.

In the methods and apparatuses for beam indication, and devices provided by the embodiments of the present application, the network device first determines the target beam of the first time, and then transmits the beam indication information to the terminal based on the target beam of the first time. The beam indication information is used to indicate to perform, based on the target beam, signal transmission from the second time, where the second time is no later than the first time. The first time is the predicted time of the target beam, and the second time is the effective time of the target beam. The network device and the terminal may perform signal transmission based on the target beam from the second time. Since the second time is no later than the first time, the target beam may be used for signal transmission between the network device and the terminal after taking effect, improving the transmission performance between the network device and the terminal.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a schematic diagram of beam indication according to an embodiment of the present application;
FIG. 2 is a schematic flowchart of a method for beam indication according to an embodiment of the present application;
FIG. 3 is a schematic structural diagram of a network device according to an embodiment of the present application;
FIG. 4 is a schematic structural diagram of a terminal according to an embodiment of the present application;
FIG. 5 is a first schematic structural diagram of an apparatus for beam indication according to an embodiment of the present application; and
FIG. 6 is a second schematic structural diagram of an apparatus for beam indication according to an embodiment of the present application.

### DETAILED DESCRIPTION

To clarify the objectives, solutions, and advantages of the present application, the following provides a clear and complete description of the solutions in the present application in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

A new radio (NR) beam management scenario includes downlink beam management and uplink beam management. Taking downlink beam management for example, a network device needs to cyclically transmit downlink transmit (Tx) beams in different directions. A terminal receives downlink Tx beams with receive (Rx) beams and measures channel state information reference signal (CSI-RS)/synchronization signal block (SSB) signals transmitted on all Tx beams. A beam with the best receiving performance is selected for the network device to transmit information to the terminal with this downlink Tx beam subsequently. The receiving performance may be represented by, for example, reference signal receiving power (RSRP). Taking uplink beam management for example, the terminal needs to cyclically transmit uplink Tx beams in different directions. The network device receives the uplink Tx beams with Rx beams and measures sounding reference signals (SRSs) transmitted on all Tx beams. The beam with the best receiving performance is selected. The terminal is indicated to transmit information to the network device with this uplink Tx beam, and the receiving performance may be represented by RSRP.

Traditionally, the network device or terminal may predict the best downlink Tx beam, best uplink Tx beam, best downlink Rx beam, best uplink Rx beam or best beam pair (including downlink Tx beam and downlink Rx beam pair, or uplink Tx beam and uplink Rx beam pair) at a certain time in the future, and the network device or terminal may know the future best beam in advance and improve scheduling performance.

After the network device or terminal predicts the best beam at a certain time in the future, the network device needs to indicate the best beam to the terminal, and then the network device and the terminal may perform signal transmission based on the best beam.

Traditionally, there are mainly two ways for beam indication, namely an R15/16 beam indication way and an R17 beam indication way.

Firstly, the R15/16 beam indication way is introduced.

In a Rel-15/16 system, the beams of different channels and reference signals are independently indicated. For example, for a physical downlink control channel (PDCCH), beams of each control resource set (CORESET) are configured by radio resource control (RRC) and activated by a media access control-control element (MAC CE), which is a way for beam indication based on MAC CE.

A way for beam indication for physical downlink shared channel (PDSCH) is a way for beam indication based on downlink control information (DCI).

If *tci-PresentInDCI* (a higher layer parameter) is enabled, a beam of CORESET with a lowest identifier (ID) in a PDCCH in a nearest slot of a PDSCH is used for the PDSCH with a slot interval between the PDCCH and the PDSCH less than or equal to a threshold value. A beam indicated in a transmission configuration indicator (TCI) dynamically indicated in DCI of a PDCCH scheduling a PDSCH is used for the PDSCH with a slot interval between the PDCCH and the PDSCH greater than the threshold value.

If *tci-PresentInDCI* is not enabled, a beam of CORESET with a lowest ID between a first CORESET and a second CORESET in a PDCCH scheduling a PDSCH is used for the PDSCH with the slot interval between the PDCCH and the PDSCH greater than the threshold value. A beam of CORESET with a lowest ID in a PDCCH in the nearest slot is used for the PDSCH with a slot interval between the PDCCH and the PDSCH less than or equal to the threshold value.

A beam of a physical uplink control channel (PUCCH) is determined by activating *PUCCH-SpatialRelationInfo* through MAC CE, and the *PUCCH-SpatialRelationInfo* is configured by RRC. That is the way for beam indication based on MAC CE.

A beam of a physical uplink shared channel (PUSCH) is dynamically indicated by an SRS resource indicator (SRI), and is determined based on a most recent SRS resource transmitted before DCI scheduling the PUSCH. That is the way for beam indication based on DCI.

Below is an introduction to the R17 beam indication way.

To support a unified beam indication framework for different channels and reference signals, Rel-17 proposes to use TCI state to simultaneously indicate at least a terminal-dedicated downlink PDSCH, and all or part of beam information of CORESET; and/or, use TCI state to simultaneously indicate at least a terminal uplink PUSCH, and uplink transmission beam information of all or part of the PUCCH. Rel-17 defines two types of TCI states, one is an uplink-and-downlink-joint TCI state, and the other is an uplink-and-downlink-independent TCI state.

For the uplink-and-downlink-joint TCI state, it is applied in a scenario of uplink and downlink beam reciprocity. The data and control channels of both uplink and downlink use the same beam, and only one TCI state is needed for indication. The joint beam indication uses one TCI state to indicate downlink quasi-colocation (QCL) information and uplink transmit spatial filter information.

Correspondingly, the uplink-and-downlink-independent TCI state is applied in a scenario where the uplink and downlink beam reciprocity is not satisfied. Independent beam indication is used to indicate the uplink and downlink beams separately. Independent beam indication uses two independent TCI states, one for downlink and the other for uplink.

Unlike joint beam indication that only uses one TCI state, independent beam indication may indicate one or two TCI states. Therefore, one code point in the TCI field corresponds to a pair of TCI states, one for uplink and the other for downlink. In case that a beam indication signaling indicates this code point, the terminal simultaneously applies this downlink TCI state and this uplink TCI state; alternatively, one code point in the TCI field corresponds only to one downlink TCI state, in case that the beam indication signaling indicates this code point, the terminal applies this downlink TCI state and maintains the current uplink TCI state; alternatively, one code point in the TCI field corresponds to only one uplink TCI state, in case that the beam indication signaling indicates this code point, the terminal applies this uplink TCI state and maintains the current downlink TCI state.

In the above embodiments, two different ways for beam indication are introduced. No matter which way for beam indication is used, the network device indicating the best beam to the terminal requires a certain effective time. If the effective time of the best beam does not match the predicted time, performance loss is caused.

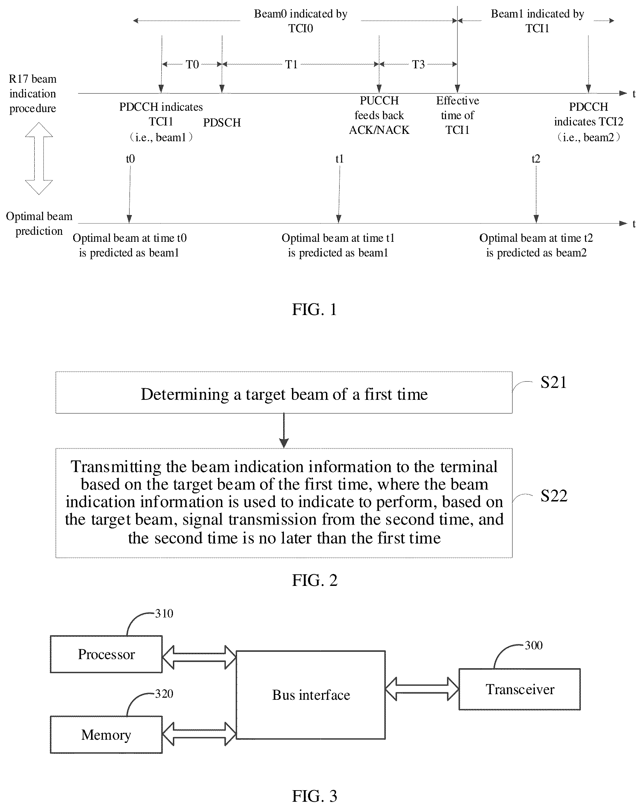

For example, it may be understood in conjunction with FIG. 1. FIG. 1 is a schematic diagram of beam indication according to an embodiment of the present application, which illustrates the R17 beam indication procedure and the best beam prediction procedure, respectively.

Taking the R17 beam indication way for example (using TCI to indicate downlink or uplink Tx beams), there is an effective time (the effective time is T0+T1+T2) for the network device to indicate beam 1 through TCI1. After the network device indicates beam 1 through TCI1 and a duration of T0+T1+T2, beam 1 takes effect. The predicted best beam at time t0 is beam 1, the predicted best beam at time t1 is beam 1, and the predicted best beam at time t2 is beam 2.

Before beam 1 takes effect, the terminal uses the previously indicated beam 0 instead of beam 1. After beam 1 takes effect, the best beam for the terminal may change to beam 2 according to the predicted result, which leads to the network device and the terminal always not using the best beam for signal transmission, resulting in a decrease in transmission and receiving performance between the network device and the terminal.

There is also a similar effective time for the R15/16 beam indication way. For example, for beam indication based on DCI (TCI indicating a beam of PDSCH), its effective time is a time-domain threshold (e.g., *timeDurationForQC,* a higher layer configured time-domain threshold); for beam indication based on MAC CE, its effective time is 3 ms (i.e., the effective time of MAC CE).

Due to the mismatch between the effective time and predicted time of the best beam, performance loss may occur between the network device and the terminal. Therefore, embodiments of the present application provide a beam indication solution that matches the effective time and predicted time of the beam, reducing performance loss between the network device and the terminal. The following introduces the solutions of the present application in conjunction with the accompanying drawings.

FIG. 2 is a schematic flowchart of a method for beam indication according to an embodiment of the present application. As shown in FIG. 2, the method includes the following steps.

S21: determining a target beam of a first time.

The first time is a certain time in the future, and the target beam is the beam with the best transmission performance between the network device and the terminal at the first time.

The target beam of the first time may be predicted by the network device, predicted by the terminal and fed back to the network device, or predicted by a third-party device and fed back to the network device, which is not limited in this embodiment.

In an embodiment of the present application, the target beam may include a best Tx beam, which may include a best downlink Tx beam used for downlink signal transmission between the network device and the terminal; the best Tx beam may also include a best uplink Tx beam, which is used for uplink signal transmission between the network device and the terminal.

The target beam may also include a best Rx beam, which may include a best downlink Rx beam used for the terminal to receive the downlink signal transmission transmitted from the network device; the best Rx beam may also include a best uplink Rx beam, which is used for the network device to receive the uplink signal transmission transmitted from the terminal.

The target beam may also be a best beam pair, which includes the best Tx beam and the best Rx beam. The best Tx beam may include the best downlink Tx beam and the best uplink Tx beam, and the best Rx beam may include the best downlink Rx beam and the best uplink Rx beam. Therefore, the best beam pair may include the best downlink Tx beam and the best downlink Rx beam, or the best uplink Tx beam and the best uplink Rx beam.

S22 : transmitting the beam indication information to the terminal based on the target beam of the first time, where the beam indication information is used to indicate to perform, based on the target beam, signal transmission from the second time, and the second time is no later than the first time.

After the network device determines the target beam of the first time, the network device transmits beam indication information to the terminal based on the target beam of the first time, where the beam indication information is used to indicate to perform, based on the target beam, signal transmission from the second time.

After receiving the beam indication information, the terminal may start signal transmission between the network device and the terminal based on the target beam from the second time. In an embodiment of the present application, signal transmission between the network device and the terminal may include data transmission, control signal transmission, reference signal transmission, feedback information transmission, and so on. The second time is no later than the first time.

In the methods for beam indication provided by the embodiments of the present application, the network device first determines the target beam of the first time, and then transmits the beam indication information to the terminal based on the target beam of the first time. The beam indication information is used to indicate to perform, based on the target beam, signal transmission from the second time, where the second time is no later than the first time. The first time is the predicted time of the target beam, and the second time is the effective time of the target beam. The network device and the terminal may perform signal transmission based on the target beam from the second time. Since the second time is no later than the first time, the target beam may be used for signal transmission between the network device and the terminal after taking effect, improving the transmission performance between the network device and the terminal.

On the basis of any of the above embodiments, the following provides a detailed introduction to the solutions of the present application in conjunction with the accompanying drawings.

After determining the target beam of the first time, the network device may transmit the beam indication information to the terminal based on the target beam of the first time, where the first time is the predicted time of the target beam. That is, the network device needs to determine the best target beam of the first time in the future, and then indicates the terminal through beam indication information. The target beam of the first time may be predicted by the network device, predicted by the terminal and fed back to the network device, or predicted by a third-party device and fed back to the network device.

Due to the need for a certain effective duration to indicate the target beam, to match the predicted time and effective time of the target beam, the network device may use different ways to indicate the target beam. The following introduces the procedure.

In an embodiment, the network device may indicate the target beam in advance. In an embodiment, after determining the target beam of the first time, the network device determines the effective duration required to indicate the target beam, and then transmits the beam indication information to the terminal at the third time based on the effective duration and the target beam of the first time. The third time is earlier than the first time, and the duration between the third time and the first time is the effective duration. The beam indication information is used to indicate the first TCI state, which is used to indicate the target beam.

In an embodiment of the present application, the effective duration required for the target beam may vary for different beam indication ways. In an embodiment, for the R17 beam indication way, the effective duration required for the target beam is T0+T1+T2. The network device needs to transmit beam indication information to the terminal at T0+T1+T2 before the first time to indicate the first TCI state, where the first TCI state indicates the predicted target beam; for beam indication (based on DCI) of the PDSCH in the Rel-15/16 beam indication way, the network device needs to transmit beam indication information to the terminal at a time-domain threshold (defined by R15) time before the first time to indicate the first TCI state, where the first TCI state indicates the predicted target beam; for other downlink signals besides PDSCH (based on MAC CE) in the Rel-15/16 beam indication way, the network device needs to transmit beam indication information to the terminal before the effective time of MAC CE (3 ms) to indicate the first TCI state, where the first TCI state indicates the predicted target beam.

Due to the need of the effective duration for the target beam to take effect after the network device transmits the beam indication information to the terminal, the network device transmits the beam indication information in advance before the first time, that is, the network device transmits the beam indication information to the terminal at the third time. After the effective duration from the third time, the first time is reached, which is the effective time of the target beam. In this implementation, the effective time and predicted time of the target beam are equal, and the terminal may perform, based on the beam indication information, signal transmission between the network device and the terminal based on the target beam from the second time (the first time is equal to the second time).

Due to the network device transmits beam indication information to the terminal at the third time, indicating the target beam, the third time is earlier than the first time, and the duration between the third time and the first time is the effective duration required to indicate the target beam, after receiving the beam indication information at the third time, the terminal reaches the first time just after the effective duration, that is, the effective time (i.e., the second time) of the target beam is equal to the predicted time (i.e., the first time) of the target beam. This allows signal transmission between the terminal and the network device based on the target beam from the second time, improving the transmission performance between the network device and the terminal.

In an embodiment, the network device may indicate the target beam and the effective time of the target beam to match between the predicted time and the effective time of the target beam.

In an embodiment, the network device may directly indicate the first TCI state and the effective time of the first TCI state through beam indication information, where the beam indication information is any of a first MAC CE, first DCI, and a first RRC message.

In case that the beam indication information is the first MAC CE or the first RRC message, the beam indication information includes any of the following (1.1) - (1.3).

(1.1) A first TCI state and first time information, where the first time information is used to indicate the effective time of the first TCI state.

In case that the beam indication information is the first MAC CE, the first MAC CE may directly indicate the first TCI state and the first time information. That is, the first MAC CE includes the first TCI state and the first time information, and the first time information is used to indicate the effective time of the first TCI state. After receiving the first MAC CE, the terminal may obtain the first TCI state and first time information based on the first MAC CE, to determine the target beam based on the first TCI state, and determine the effective time of the target beam based on the first time information, that is, the second time.

In case that the beam indication information is the first RRC message, the first RRC message may directly indicate the first TCI state and the first time information. That is, the first RRC message includes the first TCI state and the first time information, and the first time information is used to indicate the effective time of the first TCI state. After receiving the first RRC message, the terminal may obtain the first TCI state and the first time information based on the first RRC message, to determine the target beam based on the first TCI state, and determine the effective time of the target beam based on the first time information, that is, the second time.

The first time information may be the effective time of the first TCI state, or the first delay. The first delay may be a delay between a receiving time of the terminal receiving the first MAC CE and the effective time of the first TCI state. The first delay may also be a delay between a receiving time of the terminal receiving the first RRC message and the effective time of the first TCI state. In case that the first time information is the first delay, the first delay may be represented by symbols, slots, etc., such as N symbols, N slots, N subframes, N frames, etc.

(1.2) A first combination identifier, where the first combination identifier is used to indicate a first target combination among multiple first combinations, any first combination includes one TCI state and one piece of time information, and the first target combination includes the first TCI state and first time information.

The network device may pre-configure multiple first combinations through the RRC message, any first combination including one TCI state and one piece of time information, and then indicate one of the combinations by the first MAC CE or the first RRC message. In embodiments of the present application, the RRC message is a different RRC message from the first RRC message.

For example, the network device transmits the first MAC CE to the terminal, where the first MAC CE includes a first combination identifier. After receiving the first combination identifier, the terminal determines the first target combination among multiple first combinations based on the first combination identifier. Each first combination includes one TCI state and one piece of time information. The terminal determines the TCI state in the first target combination as the first TCI state and the time information in the first target combination as the first time information. The first combination identifier may be, for example, an index of the first target combination in the RRC message.

For example, the network device transmits the first RRC message to the terminal, where the first RRC message includes a first combination identifier. After receiving the first combination identifier, the terminal determines the first target combination among multiple first combinations based on the first combination identifier. Each first combination includes one TCI state and one piece of time information. The terminal determines the TCI state in the first target combination as the first TCI state and the time information in the first target combination as the first time information. The first combination identifier may be, for example, an index of the first target combination in the RRC message.

The first time information may be the effective time of the first TCI state, or the first delay. The first delay may be a delay between a receiving time of the terminal receiving the first MAC CE and the effective time of the first TCI state. The first delay may also be a delay between a receiving time of the terminal receiving the first RRC message and the effective time of the first TCI state. In case that the first time information is the first delay, the first delay may be represented by symbols, slots, etc., such as N symbols, N slots, N subframes, N frames, etc.

The indication way of including the first combination identifier in the beam indication information may save a quantity of bits in the MAC CE or the RRC message compared to the indication way of including the first TCI state and the first time information in the beam indication information.

(1.3) A first TCI state identifier and a first time information identifier, where the first TCI state identifier is used to indicate the first TCI state among multiple TCI states, and the first time information identifier is used to indicate first time information among multiple pieces of time information.

The network device may pre-configure multiple TCI states and multiple pieces of time information through the RRC message, and then indicate the first TCI state in the multiple TCI states and the first time information in the multiple pieces of time information through the first MAC CE or the first RRC message.

For example, the network device transmits the first MAC CE to the terminal, where first MAC CE includes the first TCI state identifier and the first time information identifier. After receiving the first TCI state identifier and the first time information identifier, the network device determines the first TCI state among multiple TCI states based on the first TCI state identifier, and determines the first time message among multiple pieces of time information based on the first time information identifier.

For example, the network device transmits the first RRC message to the terminal, where the first RRC message includes the first TCI state identifier and the first time information identifier. After receiving the first TCI state identifier and the first time information identifier, the terminal determines the first TCI state among multiple TCI states based on the first TCI state identifier, and determines the first time message among multiple pieces of time information based on the first time information identifier.

The first TCI state identifier may be, for example, an index of the first TCI state in the RRC message, and the first time information identifier may be, for example, an index of the first time information in the RRC message.

The first time information may be the effective time of the first TCI state, or the first delay. The first delay may be a delay between a receiving time of the terminal receiving the first MAC CE and the effective time of the first TCI state. The first delay may also be a delay between a receiving time of the terminal receiving the first RRC message and the effective time of the first TCI state. In case that the first time information is the first delay, the first delay may be represented by symbols, slots, etc., such as N symbols, N slots, N subframes, N frames, etc.

The indication way of including the first TCI state identifier and the first time information identifier in the beam indication information may save the quantity of bits in the MAC CE or the RRC message compared to the indication way of including the first TCI state and the first time information in the beam indication information.

In the above embodiments, the implementation of the beam indication information being the first MAC CE or the first RRC message is introduced. The following introduces the implementation of the beam indication information being the first DCI.

In case that the beam indication information is the first DCI, the first DCI includes any of the following (2.1) - (2.4).

(2.1) A first TCI state and first time information, where the first time information is used to indicate the effective time of the first TCI state.

In case that the beam indication information is the first DCI, the first DCI may directly indicate the first TCI state and the first time information. That is, the first DCI includes the first TCI state and the first time information, and the first time information is used to indicate the effective time of the first TCI state. After receiving the first DCI, the terminal may obtain the first TCI state and the first time information based on the first DCI, to determine the target beam based on the first TCI state, and determine the effective time of the target beam based on the first time information, that is, the second time.

In an embodiment of the present application, the first time information may be any of the effective time of the first TCI state, the second delay, the third delay, and the fourth delay, where the second delay is a delay between a receiving time of a PDCCH scheduling a PDSCH and the effective time of the first TCI state; the third delay is a delay between a receiving time of a PDSCH and the effective time of the first TCI state; and the fourth delay is a delay between a transmitting time of a PUCCH and the effective time of the first TCI state.

In case that the first time information is the second delay, the third delay, or the fourth delay, the first time information may be represented by symbols, slots, etc., such as N symbols, N slots, N subframes, N frames, etc.

(2.2) A second combination identifier, where the second combination identifier is used to indicate a second target combination among multiple second combinations.

The multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and the first time information

The network device may pre-configure multiple combinations through the RRC message, where the multiple combinations are combinations composed of multiple TCI states and multiple pieces of time information combinations. Any combination includes one TCI state and one piece of time information. Then, the MAC CE indicates some of the combinations in the multiple combinations. For example, the MAC CE may activate some combinations among multiple combinations, and the combinations indicated by the MAC CE among the multiple combinations are the multiple second combinations.

Then, the first DCI may indicate the second target combination among multiple second combinations. In an embodiment, the network device transmits first DCI to the terminal, where the first DCI includes a second combination identifier. After receiving the second combination identifier, the terminal determines a second target combination among multiple second combinations based on the second combination identifier. The second target combination includes the first TCI state and the first time information. The second combination identifier may be, for example, an index of the second target combination in MAC CE.

In an embodiment of the present application, the first time information may be any of the effective time of the first TCI state, the second delay, the third delay, and the fourth delay, where the second delay is a delay between a receiving time of a PDCCH scheduling a PDSCH and the effective time of the first TCI state; the third delay is a delay between a receiving time of a PDSCH and the effective time of the first TCI state; and the fourth delay is a delay between a transmitting time of a PUCCH and the effective time of the first TCI state.

In case that the first time information is the second delay, the third delay, or the fourth delay, the first time information may be represented by symbols, slots, etc., such as N symbols, N slots, N subframes, N frames, etc.

The indication way of including the second combination identifier in the beam indication information may save a quantity of bits in DCI compared to the indication way of including the first TCI state and the first time information in the beam indication information.

(2.3) A third combination identifier, where the third combination identifier is used to indicate a third target combination among multiple third combinations.

The multiple third combinations are combinations of multiple TCI states and multiple pieces of time information indicated by MAC CE, any third combination includes one TCI state and one piece of time information, and the third target combination includes the first TCI state and first time information.

The network device may pre-configure multiple TCI states and multiple pieces of time information through the RRC message, and then the MAC CE indicates multiple TCI states in the TCI states configured by the RRC message (e.g., MAC CE indicates to activate multiple TCI states in the TCI states configured by the RRC message), and indicates multiple pieces of time information in the time information configured by the RRC message (e.g., MAC CE indicates to activate multiple pieces of time information in the time information configured by the RRC message). Then the MAC CE combines multiple indicated TCI states and multiple pieces of indicated time information to obtain multiple third combinations.

Then, the first DCI may indicate the third target combination among the multiple third combinations. In an embodiment, the network device transmits the first DCI to the terminal, where the first DCI includes a third combination identifier. After receiving the third combination identifier, the terminal determines a third target combination among multiple third combinations based on the third combination identifier. The third target combination includes the first TCI state and the first time information. The third combination identifier may be, for example, an index of the third target combination in MAC CE.

In an embodiment of the present application, the first time information may be any of the effective time of the first TCI state, the second delay, the third delay, and the fourth delay, where the second delay is a delay between a receiving time of a PDCCH scheduling a PDSCH and the effective time of the first TCI state; the third delay is a delay between a receiving time of a PDSCH and the effective time of the first TCI state; and the fourth delay is a delay between a transmitting time of a PUCCH and the effective time of the first TCI state.

In case that the first time information is the second delay, the third delay, or the fourth delay, the first time information may be represented by symbols, slots, etc., such as N symbols, N slots, N subframes, N frames, etc.

The indication way of including the third combination identifier in the beam indication information may save the quantity of bits in DCI compared to the indication way of including the first TCI state and the first time information in the beam indication information.

(2.4) A second TCI state identifier and a second time information identifier.

The second TCI state identifier is used to indicate the first TCI state among multiple TCI states indicated by MAC CE, and the second time information identifier is used to indicate first time information among multiple pieces of time information indicated by MAC CE.

The network device may pre-configure multiple TCI states and multiple pieces of time information through the RRC message, and then the MAC CE indicates multiple TCI states in the TCI states configured by the RRC message (e.g., MAC CE indicates to activate multiple TCI states in the TCI states configured by the RRC message), and indicates multiple pieces of time information in the time information configured by the RRC message (e.g., MAC CE indicates to activate multiple pieces of time information in the time information configured by the RRC message).

The network device transmits the first DCI to the terminal, where the first DCI includes a second TCI state identifier and a second time information identifier. After receiving the second TCI state identifier and the second time information identifier, the terminal determines the first TCI state among multiple TCI states based on the second TCI state identifier, and determines the first time information among multiple pieces of time information based on the second time information identifier. The second TCI state identifier may be, for example, the index of the first TCI state in MAC CE, and the second time information identifier may be, for example, the index of the first time information in MAC CE.

In an embodiment of the present application, the first time information may be any of the effective time of the first TCI state, the second delay, the third delay, and the fourth delay, where the second delay is a delay between a receiving time of a PDCCH scheduling a PDSCH and the effective time of the first TCI state; the third delay is a delay between a receiving time of a PDSCH and the effective time of the first TCI state; and the fourth delay is a delay between a transmitting time of a PUCCH and the effective time of the first TCI state.

In case that the first time information is the second delay, the third delay, or the fourth delay, the first time information may be represented by symbols, slots, etc., such as N symbols, N slots, N subframes, N frames, etc.

The indication way of including the second TCI state identifier and the second time information identifier in the beam indication information may save the quantity of bits in DCI compared to the indication way of including the first TCI state and the first time information in the beam indication information.

In an embodiment, the network device may indicate the target beam, the effective time of the target beam, and the beam for signal transmission at the current time to match the predicted time and effective time of the target beam.

In an embodiment, the network device may directly indicate the first TCI state, the effective time of the first TCI state, and the second TCI state through beam indication information. The first TCI state is used to indicate the target beam, the effective time of the first TCI state is used to indicate the second time (i.e., the effective time of the target beam), and the second TCI state is used to indicate the beam for signal transmission at the current time. The beam indication information is any of a second MAC CE, second DCI, and a second RRC message.

For PDSCH scheduling of R15, the beam indication information indicates the first TCI state, the effective time of the first TCI state, and the second TCI state. It may be applied to a scenario of scheduling multiple repeated transmissions of PDSCH, that is, scheduling multiple PDSCHs with one PDCCH. During the transmission of PDSCH, if the predicted target beam changes, the second TCI state may indicate the beam change.

For an R17 unified TCI indication scenario, as the effective time of the current TCI cannot be adjusted, that is, the effective time of the current TCI is fixed, indicating a future TCI state may achieve the goal of indicating the target beam of the future time in advance. After receiving a positive acknowledgement (ACK)/negative acknowledgement (NACK), the network device may determine to directly use the new target beam for signal transmission in case that the target beam changes in the future, without the need for further instructions. In this way, each scheduling indicates a future TCI state, and the goal of matching the effective time and predicted time of the target beam may be achieved.

In case that the beam indication information is a second MAC CE or a second RRC message, the beam indication information includes any of the following (3.1) - (3.3).

(3.1) A first TCI state, first time information, and a second TCI state.

In case that the beam indication information is the second MAC CE, the second MAC CE may directly indicate the first TCI state, the first time information, and the second TCI state. That is, the second MAC CE includes the first TCI state, the first time information, and the second TCI state. The first time information is used to indicate the effective time of the first TCI state. After receiving the second MAC CE, the terminal may obtain the first TCI state, the first time information, and second TCI state based on the second MAC CE, to determine the target beam based on the first TCI state, determine the effective time of the target beam based on the first time information, that is, the second time, and determine the beam for signal transmission at the current time based on the second TCI state.

In case that the beam indication information is the second RRC message, the second RRC message may directly indicate the first TCI state, the first time information, and the second TCI state. That is, the second RRC message includes the first TCI state, the first time information, and the second TCI state. The first time information is used to indicate the effective time of the first TCI state. After receiving the second RRC message, the terminal may obtain the first TCI state, the first time information, and the second TCI state based on the second RRC message, to determine the target beam based on the first TCI state, determine the effective time of the target beam based on the first time information, that is, the second time, and determine the beam for signal transmission at the current time based on the second TCI state.

The first time information may be the effective time of the first TCI state, or the first delay. The first delay may be a delay between a receiving time of the terminal receiving the second MAC CE and the effective time of the first TCI state. The first delay may also be a delay between a receiving time of the terminal receiving the second RRC message and the effective time of the first TCI state. The first time information may be represented by symbols, slots, etc., such as N symbols, N slots, N subframes, N frames, etc.

(3.2) A fourth combination identifier, where the fourth combination identifier is used to indicate a fourth target combination among multiple fourth combinations.

The network device may pre-configure multiple fourth combinations through the RRC message, any fourth combination includes two TCI states and one piece of time information, and then indicate one combination by the second MAC CE or the second RRC message.

For example, the network device transmits a second MAC CE to the terminal, where the second MAC CE includes a fourth combination identifier. After receiving the fourth combination identifier, the terminal determines the fourth target combination among multiple fourth combinations based on the fourth combination identifier. Each fourth combination includes two TCI states and one piece of time information. The terminal determines the first TCI state, the first time information, and the second TCI state based on the fourth combination identifier. The fourth combination identifier may be, for example, an index of the fourth target combination in the RRC message.

For example, the network device transmits a second RRC message to the terminal, where the second RRC message includes a fourth combination identifier. After receiving the fourth combination identifier, the terminal determines the fourth target combination among multiple fourth combinations based on the fourth combination identifier. Each fourth combination includes two TCI states and one piece of time information. The terminal determines the first TCI state, the first time information, and the second TCI state based on the fourth combination identifier. The fourth combination identifier may be, for example, the index of the fourth target combination in the RRC message.

The first time information may be the effective time of the first TCI state, or the first delay. The first delay may be a delay between a receiving time of the terminal receiving the second MAC CE and the effective time of the first TCI state. The first delay may also be a delay between a receiving time of the terminal receiving the second RRC message and the effective time of the first TCI state. The first time information may be represented by symbols, slots, etc., such as N symbols, N slots, N subframes, N frames, etc.

The indication way of including the fourth combination identifier in the beam indication information may save the quantity of bits in the MAC CE or the RRC message compared to the indication way of including the first TCI state, the first time information, and the second TCI state in the beam indication information.

(3.3) A third TCI state identifier, a fourth TCI state identifier, and a third time information identifier.

The network device may pre-configure multiple TCI states and multiple pieces of time information through the RRC message, and then indicate the first TCI state and the second TCI state among the multiple TCI states and the first time information among the multiple pieces of time information through the second MAC CE or the second RRC message. The third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

For example, the network device transmits the second MAC CE to the terminal, where the second MAC CE includes a third TCI state identifier, a fourth TCI state identifier, and a third time information identifier. After receiving the third TCI state identifier, the fourth TCI state identifier, and the third time information identifier, the terminal determines the first TCI state among multiple TCI states based on the third TCI state identifier, determines the second TCI state among multiple TCI states based on the fourth TCI state identifier, and determines the first time message among multiple pieces of time information based on the third time information identifier.

For example, the network device transmits the second RRC message to the terminal, where the second RRC message includes a third TCI state identifier, a fourth TCI state identifier, and a third time information identifier. After receiving the third TCI state identifier, the fourth TCI state identifier, and the third time information identifier, the terminal determines the first TCI state among multiple TCI states based on the third TCI state identifier, determines the second TCI state among multiple TCI states based on the fourth TCI state identifier, and determines the first time message among multiple pieces of time information based on the third time information identifier.

The indication way of including third TCI state identifier, the fourth TCI state identifier, and the third time information identifier in the beam indication information may save the quantity of bits in the MAC CE or the RRC message compared to the indication way of including the first TCI state, the first time information, and the second TCI state in the beam indication information.

In the above embodiments, the implementation of the beam indication information being the second MAC CE or second RRC message is introduced. The following introduces the implementation of the beam indication information being the second DCI.

In case that the beam indication information is the second DCI, the second DCI includes any of the following (4.1) - (4.4).

(4.1) A first TCI state, first time information, and a second TCI state.

In case that the beam indication information is the second DCI, the second DCI may directly indicate the first TCI state, the first time information, and the second TCI state. That is, the second DCI includes the first TCI state, the first time information, and the second TCI state. The first time information is used to indicate the effective time of the first TCI state. After receiving the second DCI, the terminal may obtain the first TCI state, the first time information, and the second TCI state based on the second DCI, to determine the target beam based on the first TCI state, determine the effective time of the target beam based on the first time information, that is, the second time, and determine the beam for signal transmission at the current time based on the second TCI state.

In an embodiment of the present application, the first time information may be any of the effective time of the first TCI state, the second delay, the third delay, and the fourth delay, where the second delay is a delay between a receiving time of a PDCCH scheduling a PDSCH and the effective time of the first TCI state; the third delay is a delay between a receiving time of a PDSCH and the effective time of the first TCI state; and the fourth delay is a delay between a transmitting time of a PUCCH and the effective time of the first TCI state.

In case that the first time information is the second delay, the third delay, or the fourth delay, the first time information may be represented by symbols, slots, etc., such as N symbols, N slots, N subframes, N frames, etc.

(4.2) A fifth combination identifier, where the fifth combination identifier is used to indicate a fifth target combination among multiple fifth combinations.

The multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, the first time information, and the second TCI state.

The network device may pre-configure multiple combinations through the RRC message, where the multiple combinations are combinations composed of multiple TCI states and multiple pieces of time information. Any combination includes two TCI states and one piece of time information. Then, the MAC CE indicates some of the combinations among the multiple combinations. For example, the MAC CE may activate some combinations among multiple combinations, and the combinations indicated by the MAC CE among multiple combinations are the multiple fifth combinations.

Then, the second DCI may indicate the fifth target combination among the multiple fifth combinations. In an embodiment, the network device transmits second DCI to the terminal, where the second DCI includes a fifth combination identifier. After receiving the fifth combination identifier, the terminal determines a fifth target combination among multiple fifth combinations based on the fifth combination identifier. The fifth target combination includes the first TCI state, the first time information, and the second TCI state. The fifth combination identifier may be, for example, an index of the fifth target combination in MAC CE.

The indication way of including the fifth combination identifier in the beam indication information may save the quantity of bits in DCI compared to the indication way of including the first TCI state, the first time information, and the second TCI state in the beam indication information.

(4.3) A sixth combination identifier, where the sixth combination identifier is used to indicate a sixth target combination among multiple sixth combinations.

The multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state

The network device may pre-configure multiple TCI states and multiple pieces of time information through the RRC message, and then the MAC CE indicates multiple TCI states in the TCI states configured by the RRC message (e.g., MAC CE indicates to activate multiple TCI states in the TCI states configured by the RRC message), and indicates multiple pieces of time information in the time information configured by the RRC message (e.g., MAC CE indicates to activate multiple pieces of time information in the time information configured by the RRC message). Then MAC CE combines multiple TCI states and multiple pieces of time information indicated to obtain multiple sixth combinations.

Then, the second DCI may indicate the sixth target combination among the multiple sixth combinations. In an embodiment, the network device transmits second DCI to the terminal, where the second DCI includes a sixth combination identifier. After receiving the sixth combination identifier, the terminal determines the sixth target combination among multiple sixth combinations based on the sixth combination identifier. The sixth target combination includes the first TCI state, the first time information, and the second TCI state. The sixth combination identifier may be, for example, an index of the sixth target combination in MAC CE.

The indication way of including the sixth combination identifier and the third time information identifier in the beam indication information may save the quantity of bits in DCI compared to the indication way of including the first TCI state, the first time information, and the second TCI state in the beam indication information.

(4.4) A fifth TCI state identifier, a fourth time information identifier, and a sixth TCI state identifier.

The fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states

The network device may pre-configure multiple TCI states and multiple pieces of time information through the RRC message, and then the MAC CE indicates multiple TCI states in the TCI states configured by the RRC message (e.g., MAC CE indicates to activate multiple TCI states in the TCI states configured by the RRC message), and indicates multiple pieces of time information in the time information configured by the RRC message (e.g., MAC CE indicates to activate multiple pieces of time information in the time information configured by the RRC message).

The network device transmits second DCI to the terminal, where the second DCI includes a fifth TCI state identifier, a fourth time information identifier, and a sixth TCI state identifier. After receiving the fifth TCI state identifier, the fourth time information identifier, and the sixth TCI state identifier, the terminal determines the first TCI state among multiple TCI states based on the fifth TCI state identifier, determines the first time information among multiple pieces of time information based on the fourth time information identifier, and determines the second TCI state among multiple TCI states based on the sixth TCI state identifier. The fifth TCI state identifier may be, for example, an index of the first TCI state in MAC CE, the fourth time information identifier may be, for example, an index of the first time information in MAC CE, and the sixth TCI state identifier may be, for example, an index of the second TCI state in MAC CE.

The indication way of including the fifth TCI state identifier, the fourth time information identifier, and the sixth TCI state identifier in the beam indication information may save the quantity of bits in DCI compared to the indication way of including the first TCI state, the first time information, and the second TCI state in the beam indication information.

In summary, in the methods for beam indication provided by the embodiments of the present application, the network device first determines the target beam of the first time, and then transmits the beam indication information to the terminal based on the target beam of the first time. The beam indication information is used to indicate to perform, based on the target beam, signal transmission from the second time, where the second time is no later than the first time. The embodiments of the present application provide a solution for the network device to transmit beam indication information in advance at the third time, as well as a solution for the network device to directly indicate the target beam and the effective time of the target beam, matching between the first time and the second time. The first time is the predicted time of the target beam, and the second time is the effective time of the target beam. The network device and the terminal may perform signal transmission based on the target beam from the second time. Since the second time is no later than the first time, the target beam may be used for signal transmission between the network device and the terminal after taking effect, improving the transmission performance between the network device and the terminal.

FIG. 3 is a schematic structural diagram of a network device according to an embodiment of the present application. As shown in FIG. 3, the network device includes a memory 320, a transceiver 300, and a processor 310, where
the memory 320 is used for storing a computer program, the transceiver 300 is used for receiving and transmitting data under control of the processor, and the processor 310 is used for reading the computer program in the memory and performing the following operations:
determining a target beam of a first time; and
transmitting beam indication information to a terminal based on the target beam of the first time, where the beam indication information is used to indicate to perform, based on the target beam, signal transmission from a second time, and the second time is no later than the first time.

In an embodiment, the transceiver 300 is used for receiving and transmitting data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, which are well known in the art, and therefore will not be further described in the present application. The bus interface provides an interface. The transceiver 300 may include multiple elements, i.e., include a transmitter and a receiver, units for providing communication with various other devices over transmission media including wireless channels, wired channels, fiber optic cables, and the like. The processor 310 is responsible for managing the bus architecture and general processing, and the memory 320 may store data used by the processor 310 when performing operations.

In an embodiment, the processor 310 may be a central processing unit (CPU), an application specific integrated circuit (ASIC), a field-programmable gate array (FPGA), or a complex programmable logic device (CPLD). The processor may also use a multi-core architecture.

The processor is configured to perform any of the methods of the embodiments of the present application based on an obtained executable instruction by calling the computer program stored in the memory. The processor and memory may also be physically separated.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and transmitting the beam indication information to the terminal based on the target beam of the first time includes:
determining an effective duration required to indicate the target beam; and
based on the effective duration and the target beam of the first time, transmitting the beam indication information to the terminal at a third time, where the third time is earlier than the first time, and a duration between the third time and the first time is the effective duration.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

It should be noted that the network device provided in the embodiments of the present application is capable of implementing all method steps implemented by the method embodiment with the network device as the execution subject, and may achieve the same technical effects. Therefore, specific descriptions of the same parts and beneficial effects as the method embodiment in this embodiment are not repeated here.

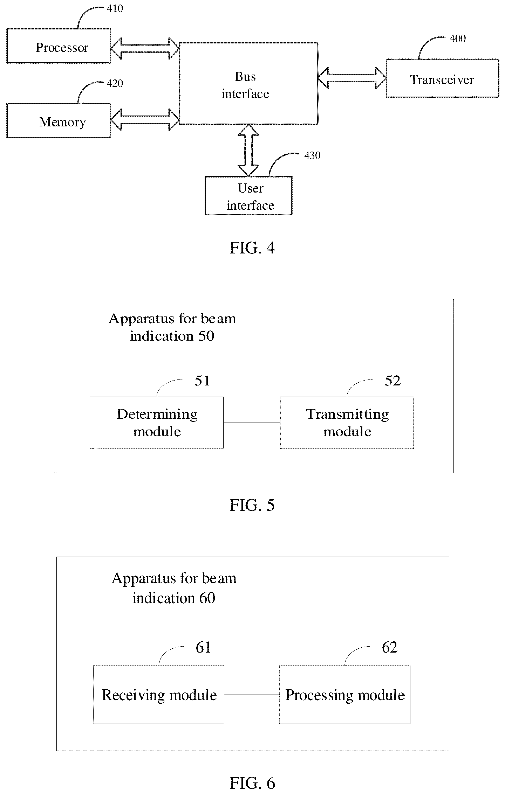

FIG. 4 is a schematic structural diagram of a terminal according to an embodiment of the present application. As shown in FIG. 4, the terminal includes a memory 420, a transceiver 400, and a processor 410, where
the memory 420 is used for storing a computer program, the transceiver 400 is used for receiving and transmitting data under control of the processor, and the processor 410 is used for reading the computer program in the memory and performing the following operations:
receiving beam indication information transmitted from a network device, where the beam indication information is used to indicate to perform, based on a target beam, signal transmission from a second time; and
based on the beam indication information, performing signal transmission based on the target beam from the second time, where the second time is no later than a first time of the target beam.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may include multiple elements, i.e., include a transmitter and a receiver, units for providing communication with various other devices over transmission media including wireless channels, wired channels, fiber optic cables, and the like. For different user equipment, a user interface 430 may be an interface capable of externally or internally connecting the required device, and the connected device includes, but not limited to, a keypad, a display, a speaker, a microphone, a joystick, and the like.

The processor 410 is responsible for managing the bus architecture and general processing, and the memory 420 may store data used by the processor 410 when performing operations.

In some embodiments, the processor 410 may be a CPU, ASIC, FPGA, or CPLD, and the processor may also adopt a multi-core architecture.

The processor is configured to perform any of the methods of the embodiments of the present application based on an obtained executable instruction by calling the computer program stored in the memory. The processor and memory may also be physically separated.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and receiving the beam indication information transmitted from the network device includes:
receiving the beam indication information transmitted from the network device at a third time, where the third time is earlier than the first time, and a duration between the third time and the first time is an effective duration required to indicate the target beam.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

It should be noted that the terminal provided in the embodiments of the present application is capable of implementing all method steps implemented by the method embodiment with the terminal as the execution subject, and may achieve the same technical effects. Therefore, specific descriptions of the same parts and beneficial effects as the method embodiment in this embodiment are not repeated here.

FIG. 5 is a first schematic structural diagram of an apparatus for beam indication according to an embodiment of the present application. As shown in FIG. 5, the apparatus for beam indication 50 includes:
a determining module 51, used for determining a target beam of a first time; and
a transmitting module 52, used for transmitting beam indication information to a terminal based on the target beam of the first time, where the beam indication information is used to indicate to perform, based on the target beam, signal transmission from a second time, and the second time is no later than the first time.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and the transmitting module 52 is further used for:
determining an effective duration required to indicate the target beam; and
based on the effective duration and the target beam of the first time, transmitting the beam indication information to the terminal at a third time, where the third time is earlier than the first time, and a duration between the third time and the first time is the effective duration.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

In an embodiment, the apparatus for beam indication provided in the embodiments of the present application is capable of implementing all method steps implemented by the method embodiment with the network device as the execution subject, and may achieve the same technical effects. Therefore, specific descriptions of the same parts and beneficial effects as the method embodiment in this embodiment are not repeated here.

FIG. 6 is a second schematic structural diagram of an apparatus for beam indication according to an embodiment of the present application. As shown in FIG. 6, the apparatus for beam indication 60 includes:
a receiving module 61, used for receiving beam indication information transmitted from a network device, where the beam indication information is used to indicate to perform, based on a target beam, signal transmission from a second time; and
a processing module 62, used for, based on the beam indication information, performing signal transmission based on the target beam from the second time, where the second time is no later than a first time of the target beam.

In an embodiment, the first time is a predicted time of the target beam, and the second time is an effective time of the target beam.

In an embodiment, the beam indication information indicates at least one or more of:
a first transmission configuration indicator (TCI) state, where the first TCI state is used to indicate the target beam;
an effective time of a first transmission configuration indicator (TCI) state, where the effective time of the first TCI state is used to indicate the second time; or
a second transmission configuration indicator (TCI) state, where the second TCI state is used to indicate a beam for signal transmission at a current time.

In an embodiment, the beam indication information indicates the first TCI state; and the receiving module 61 is further used for:
receiving the beam indication information transmitted from the network device at a third time, where the third time is earlier than the first time, and a duration between the third time and the first time is an effective duration required to indicate the target beam.

In an embodiment, the beam indication information indicates the first TCI state and the effective time of the first TCI state; and the beam indication information is any of the following:
a first media access control-control element (MAC CE);
first downlink control information (DCI); and
a first radio resource control (RRC) message.

In an embodiment, in case that the beam indication information is the first MAC CE or the first RRC message, the beam indication information includes any of the following:
the first TCI state and first time information, where the first time information is used to indicate the effective time of the first TCI state;
a first combination identifier, where the first combination identifier is used to indicate a first target combination among multiple first combinations, any first combination includes one TCI state and one piece of time information, and the first target combination includes the first TCI state and first time information; and
a first TCI state identifier and a first time information identifier, where the first TCI state identifier is used to indicate the first TCI state among multiple TCI states, and the first time information identifier is used to indicate first time information among multiple pieces of time information.

In an embodiment, the first time information is any of the following:
the effective time of the first TCI state; and
a first delay, where the first delay is a delay between a receiving time of the terminal receiving the first MAC CE and the effective time of the first TCI state.

In an embodiment, the first DCI includes any of the following:
the first TCI state and first time information, where the first time information is used to indicate the effective time of the first TCI state;
a second combination identifier, where the second combination identifier is used to indicate a second target combination among multiple second combinations, where the multiple second combinations are combinations indicated by an MAC CE among multiple combinations, the multiple combinations are combinations composed of multiple TCI states and multiple pieces of time information, any second combination includes one TCI state and one piece of time information, and the second target combination includes the first TCI state and first time information;
a third combination identifier, where the third combination identifier is used to indicate a third target combination among multiple third combinations, the multiple third combinations are combinations of multiple TCI states and multiple pieces of time information indicated by MAC CE, any third combination includes one TCI state and one piece of time information, and the third target combination includes the first TCI state and first time information; and
a second TCI state identifier and a second time information identifier, where the second TCI state identifier is used to indicate the first TCI state among multiple TCI states indicated by MAC CE, and the second time information identifier is used to indicate first time information among multiple pieces of time information indicated by MAC CE.

In an embodiment, the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

In an embodiment, in case that the beam indication information is the second MAC CE or the second RRC message, the beam indication information includes any of the following:
the first TCI state, first time information, and the second TCI state, where the first time information is used to indicate the effective time of the first TCI state;
a fourth combination identifier, where the fourth combination identifier is used to indicate a fourth target combination among multiple fourth combinations, any fourth combination includes two TCI states and one piece of time information, and the fourth target combination includes the first TCI state, first time information, and the second TCI state; and
a third TCI state identifier, a fourth TCI state identifier, and a third time information identifier, where the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

In an embodiment, the second DCI includes any of the following:
the first TCI state, first time information, and the second TCI state, where the first time information is used to indicate the effective time of the first TCI state;
a fifth combination identifier, where the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination includes two TCI states and one piece of time information, and the fifth target combination includes the first TCI state, first time information, and the second TCI state;
a sixth combination identifier, where the sixth combination identifier is used to indicate a sixth target combination among multiple sixth combinations, the multiple sixth combinations are combinations composed of multiple TCI states and multiple pieces of time information indicated by MAC CE, any sixth combination includes two TCI states and one piece of time information, and the sixth target combination includes the first TCI state, first time information, and the second TCI state; and
a fifth TCI state identifier, a fourth time information identifier, and a sixth TCI state identifier, where the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

In an embodiment, the first time information is any of the following:
the effective time of the first TCI state; and
a second delay, where the second delay is a delay between a receiving time of a physical downlink control channel (PDCCH) scheduling a physical downlink shared channel (PDSCH) and the effective time of the first TCI state;
a third delay, where the third delay is a delay between a receiving time of a physical downlink shared channel (PDSCH) and the effective time of the first TCI state; and
a fourth delay, where the fourth delay is a delay between a transmitting time of a physical uplink control channel (PUCCH) and the effective time of the first TCI state.

**In** an embodiment, the apparatus for beam indication provided in the embodiments of the present application is capable of implementing all method steps implemented by the method embodiment with the terminal as the execution subject, and may achieve the same technical effects. Therefore, specific descriptions of the same parts and beneficial effects as the method embodiment in this embodiment are not repeated here.

**It** should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

**If** the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

In some embodiments, a computer-readable storage medium is further provided, where the computer-readable storage medium stores a computer program for causing a computer to perform any of the methods for beam indication provided by the above method embodiments.

In an embodiment, the computer-readable storage medium provided in the embodiments of the present application may implement all the method steps implemented in the above method embodiments and achieve the same technical effects. Therefore, the same parts and beneficial effects as the method embodiments in this embodiment are not described here.

It should be noted that the computer-readable storage medium may be any available medium or data storage device that may be accessed by the computer, including but not limited to, a magnetic storage (e.g., a floppy disk, a hard disk, a magnetic tape, a magnetooptical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first", "second", etc. in the embodiments of the present application are used to distinguish similar objects and are not used to describe a specific order or sequence. It should be understood that the terms used in this way may be interchanged in appropriate circumstances, so that the embodiments of the present application may be implemented in order other than those illustrated or described herein, and the objects distinguished by "first" and "second" are usually of the same class, without limiting the number of objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions provided by the embodiments of the present application may be applicable to various systems, especially a 5^{th} generation (5G) system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computerbuilt mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage media (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computerimplemented process and instructions performed on the computer or other programmable devices provide steps for performing the functions specified in one or more flows of the flowchart and/or one or more blocks of the block diagram.

**It** is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for beam indication, performed by a network device, comprising:
determining a target beam of a first time; and
transmitting beam indication information to a terminal based on the target beam of the first time, wherein the beam indication information is used to indicate to perform, based on the target beam, signal transmission from a second time, and the second time is no later than the first time.

2. The method of claim 1, wherein the first time is a predicted time of the target beam, and the second time is an effective time of the target beam.

3. The method of claim 2, wherein the beam indication information indicates at least one or more of:
a first transmission configuration indicator (TCI) state, wherein the first TCI state is used to indicate the target beam;
an effective time of a first transmission configuration indicator (TCI) state, wherein the effective time of the first TCI state is used to indicate the second time; or
a second transmission configuration indicator (TCI) state, wherein the second TCI state is used to indicate a beam for signal transmission at a current time.

4. The method of claim 3, wherein the beam indication information indicates the first TCI state; and transmitting the beam indication information to the terminal based on the target beam of the first time comprises:
determining an effective duration required to indicate the target beam; and
based on the effective duration and the target beam of the first time, transmitting the beam indication information to the terminal at a third time, wherein the third time is earlier than the first time, and a duration between the third time and the first time is the effective duration.

5. The method of claim 3, wherein the beam indication information indicates the first TCI state and the effective time of the first TCI state; and the beam indication information is any of the following:
a first media access control-control element (MAC CE);
first downlink control information (DCI); and
a first radio resource control (RRC) message.

6. The method of claim 5, wherein in case that the beam indication information is the first MAC CE or the first RRC message, the beam indication information comprises any of the following:
the first TCI state and first time information, wherein the first time information is used to indicate the effective time of the first TCI state;
a first combination identifier, wherein the first combination identifier is used to indicate a first target combination among multiple first combinations, any first combination comprises one TCI state and one piece of time information, and the first target combination comprises the first TCI state and first time information; and
a first TCI state identifier and a first time information identifier, wherein the first TCI state identifier is used to indicate the first TCI state among multiple TCI states, and the first time information identifier is used to indicate first time information among multiple pieces of time information.

7. The method of claim 6, wherein the first time information is any of the following:
the effective time of the first TCI state; and
a first delay, wherein the first delay is a delay between a receiving time of the terminal receiving the first MAC CE and the effective time of the first TCI state.

8. The method of claim 5, wherein the first DCI comprises any of the following:
the first TCI state and first time information, wherein the first time information is used to indicate the effective time of the first TCI state;
a second combination identifier, wherein the second combination identifier is used to indicate a second target combination among multiple second combinations, wherein the multiple second combinations are combinations indicated by an MAC CE among multiple combinations, the multiple combinations are combinations composed of multiple TCI states and multiple pieces of time information, any second combination comprises one TCI state and one piece of time information, and the second target combination comprises the first TCI state and first time information;
a third combination identifier, wherein the third combination identifier is used to indicate a third target combination among multiple third combinations, the multiple third combinations are combinations of multiple TCI states and multiple pieces of time information indicated by MAC CE, any third combination comprises one TCI state and one piece of time information, and the third target combination comprises the first TCI state and first time information; and
a second TCI state identifier and a second time information identifier, wherein the second TCI state identifier is used to indicate the first TCI state among multiple TCI states indicated by MAC CE, and the second time information identifier is used to indicate first time information among multiple pieces of time information indicated by MAC CE.

9. The method of claim 3, wherein the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

10. The method of claim 9, wherein in case that the beam indication information is the second MAC CE or the second RRC message, the beam indication information comprises any of the following:
the first TCI state, first time information, and the second TCI state, wherein the first time information is used to indicate the effective time of the first TCI state;
a fourth combination identifier, wherein the fourth combination identifier is used to indicate a fourth target combination among multiple fourth combinations, any fourth combination comprises two TCI states and one piece of time information, and the fourth target combination comprises the first TCI state, first time information, and the second TCI state; and
a third TCI state identifier, a fourth TCI state identifier, and a third time information identifier, wherein the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

11. The method of claim 9, wherein the second DCI comprises any of the following:
the first TCI state, first time information, and the second TCI state, wherein the first time information is used to indicate the effective time of the first TCI state;
a fifth combination identifier, wherein the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination comprises two TCI states and one piece of time information, and the fifth target combination comprises the first TCI state, first time information, and the second TCI state;
a sixth combination identifier, wherein the sixth combination identifier is used to indicate a sixth target combination among multiple sixth combinations, the multiple sixth combinations are combinations composed of multiple TCI states and multiple pieces of time information indicated by MAC CE, any sixth combination comprises two TCI states and one piece of time information, and the sixth target combination comprises the first TCI state, first time information, and the second TCI state; and
a fifth TCI state identifier, a fourth time information identifier, and a sixth TCI state identifier, wherein the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

12. The method of claim 8 or 11, wherein the first time information is any of the following:
the effective time of the first TCI state; and
a second delay, wherein the second delay is a delay between a receiving time of a physical downlink control channel (PDCCH) scheduling a physical downlink shared channel (PDSCH) and the effective time of the first TCI state;
a third delay, wherein the third delay is a delay between a receiving time of a physical downlink shared channel (PDSCH) and the effective time of the first TCI state; and
a fourth delay, wherein the fourth delay is a delay between a transmitting time of a physical uplink control channel (PUCCH) and the effective time of the first TCI state.

13. A method for beam indication, performed by a terminal, comprising:
receiving beam indication information transmitted from a network device, wherein the beam indication information is used to indicate to perform, based on a target beam, signal transmission from a second time; and
based on the beam indication information, performing signal transmission based on the target beam from the second time, wherein the second time is no later than a first time of the target beam.

14. The method of claim 13, wherein the first time is a predicted time of the target beam, and the second time is an effective time of the target beam.

15. The method of claim 14, wherein the beam indication information indicates at least one or more of:
a first transmission configuration indicator (TCI) state, wherein the first TCI state is used to indicate the target beam;
an effective time of a first transmission configuration indicator (TCI) state, wherein the effective time of the first TCI state is used to indicate the second time; or
a second transmission configuration indicator (TCI) state, wherein the second TCI state is used to indicate a beam for signal transmission at a current time.

16. The method of claim 15, wherein the beam indication information indicates the first TCI state; and receiving the beam indication information transmitted from the network device comprises:
receiving the beam indication information transmitted from the network device at a third time, wherein the third time is earlier than the first time, and a duration between the third time and the first time is an effective duration required to indicate the target beam.

17. The method of claim 15, wherein the beam indication information indicates the first TCI state and the effective time of the first TCI state; and the beam indication information is any of the following:
a first media access control-control element (MAC CE);
first downlink control information (DCI); and
a first radio resource control (RRC) message.

18. The method of claim 17, wherein in case that the beam indication information is the first MAC CE or the first RRC message, the beam indication information comprises any of the following:
the first TCI state and first time information, wherein the first time information is used to indicate the effective time of the first TCI state;
a first combination identifier, wherein the first combination identifier is used to indicate a first target combination among multiple first combinations, any first combination comprises one TCI state and one piece of time information, and the first target combination comprises the first TCI state and first time information; and
a first TCI state identifier and a first time information identifier, wherein the first TCI state identifier is used to indicate the first TCI state among multiple TCI states, and the first time information identifier is used to indicate first time information among multiple pieces of time information.

19. The method of claim 18, wherein the first time information is any of the following:
the effective time of the first TCI state; and
a first delay, wherein the first delay is a delay between a receiving time of the terminal receiving the first MAC CE and the effective time of the first TCI state.

20. The method of claim 17, wherein the first DCI comprises any of the following:
the first TCI state and first time information, wherein the first time information is used to indicate the effective time of the first TCI state;
a second combination identifier, wherein the second combination identifier is used to indicate a second target combination among multiple second combinations, wherein the multiple second combinations are combinations indicated by an MAC CE among multiple combinations, the multiple combinations are combinations composed of multiple TCI states and multiple pieces of time information, any second combination comprises one TCI state and one piece of time information, and the second target combination comprises the first TCI state and first time information;
a third combination identifier, wherein the third combination identifier is used to indicate a third target combination among multiple third combinations, the multiple third combinations are combinations of multiple TCI states and multiple pieces of time information indicated by MAC CE, any third combination comprises one TCI state and one piece of time information, and the third target combination comprises the first TCI state and first time information; and
a second TCI state identifier and a second time information identifier, wherein the second TCI state identifier is used to indicate the first TCI state among multiple TCI states indicated by MAC CE, and the second time information identifier is used to indicate first time information among multiple pieces of time information indicated by MAC CE.

21. The method of claim 15, wherein the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

22. The method of claim 21, wherein in case that the beam indication information is the second MAC CE or the second RRC message, the beam indication information comprises any of the following:
the first TCI state, first time information, and the second TCI state, wherein the first time information is used to indicate the effective time of the first TCI state;
a fourth combination identifier, wherein the fourth combination identifier is used to indicate a fourth target combination among multiple fourth combinations, any fourth combination comprises two TCI states and one piece of time information, and the fourth target combination comprises the first TCI state, first time information, and the second TCI state; and
a third TCI state identifier, a fourth TCI state identifier, and a third time information identifier, wherein the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

23. The method of claim 21, wherein the second DCI comprises any of the following:
the first TCI state, first time information, and the second TCI state, wherein the first time information is used to indicate the effective time of the first TCI state;
a fifth combination identifier, wherein the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination comprises two TCI states and one piece of time information, and the fifth target combination comprises the first TCI state, first time information, and the second TCI state;
a sixth combination identifier, wherein the sixth combination identifier is used to indicate a sixth target combination among multiple sixth combinations, the multiple sixth combinations are combinations composed of multiple TCI states and multiple pieces of time information indicated by MAC CE, any sixth combination comprises two TCI states and one piece of time information, and the sixth target combination comprises the first TCI state, first time information, and the second TCI state; and
a fifth TCI state identifier, a fourth time information identifier, and a sixth TCI state identifier, wherein the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

24. The method of claim 20 or 23, wherein the first time information is any of the following:
the effective time of the first TCI state; and
a second delay, wherein the second delay is a delay between a receiving time of a physical downlink control channel (PDCCH) scheduling a physical downlink shared channel (PDSCH) and the effective time of the first TCI state;
a third delay, wherein the third delay is a delay between a receiving time of a physical downlink shared channel (PDSCH) and the effective time of the first TCI state; and
a fourth delay, wherein the fourth delay is a delay between a transmitting time of a physical uplink control channel (PUCCH) and the effective time of the first TCI state.

25. A network device, comprising a memory, a transceiver, and a processor, wherein
the memory is used for storing a computer program; the transceiver is used for transmitting and receiving data under control of the processor; and the processor is used for reading the computer program stored in the memory and performing the following operations:
determining a target beam of a first time; and
transmitting beam indication information to a terminal based on the target beam of the first time, wherein the beam indication information is used to indicate to perform, based on the target beam, signal transmission from a second time, and the second time is no later than the first time.

26. The network device of claim 25, wherein the first time is a predicted time of the target beam, and the second time is an effective time of the target beam.

27. The network device of claim 26, wherein the beam indication information indicates at least one or more of:
a first transmission configuration indicator (TCI) state, wherein the first TCI state is used to indicate the target beam;
an effective time of a first transmission configuration indicator (TCI) state, wherein the effective time of the first TCI state is used to indicate the second time; or
a second transmission configuration indicator (TCI) state, wherein the second TCI state is used to indicate a beam for signal transmission at a current time.

28. The network device of claim 27, wherein the beam indication information indicates the first TCI state; and transmitting the beam indication information to the terminal based on the target beam of the first time comprises:
determining an effective duration required to indicate the target beam; and
based on the effective duration and the target beam of the first time, transmitting the beam indication information to the terminal at a third time, wherein the third time is earlier than the first time, and a duration between the third time and the first time is the effective duration.

29. The network device of claim 27, wherein the beam indication information indicates the first TCI state and the effective time of the first TCI state; and the beam indication information is any of the following: |
a first media access control-control element (MAC CE);
first downlink control information (DCI); and
a first radio resource control (RRC) message.

30. The network device of claim 29, wherein in case that the beam indication information is the first MAC CE or the first RRC message, the beam indication information comprises any of the following:
the first TCI state and first time information, wherein the first time information is used to indicate the effective time of the first TCI state;
a first combination identifier, wherein the first combination identifier is used to indicate a first target combination among multiple first combinations, any first combination comprises one TCI state and one piece of time information, and the first target combination comprises the first TCI state and first time information; and
a first TCI state identifier and a first time information identifier, wherein the first TCI state identifier is used to indicate the first TCI state among multiple TCI states, and the first time information identifier is used to indicate first time information among multiple pieces of time information.

31. The network device of claim 30, wherein the first time information is any of the following:
the effective time of the first TCI state; and
a first delay, wherein the first delay is a delay between a receiving time of the terminal receiving the first MAC CE and the effective time of the first TCI state.

32. The network device of claim 29, wherein the first DCI comprises any of the following:
the first TCI state and first time information, wherein the first time information is used to indicate the effective time of the first TCI state;
a second combination identifier, wherein the second combination identifier is used to indicate a second target combination among multiple second combinations, wherein the multiple second combinations are combinations indicated by an MAC CE among multiple combinations, the multiple combinations are combinations composed of multiple TCI states and multiple pieces of time information, any second combination comprises one TCI state and one piece of time information, and the second target combination comprises the first TCI state and first time information;
a third combination identifier, wherein the third combination identifier is used to indicate a third target combination among multiple third combinations, the multiple third combinations are combinations of multiple TCI states and multiple pieces of time information indicated by MAC CE, any third combination comprises one TCI state and one piece of time information, and the third target combination comprises the first TCI state and first time information; and
a second TCI state identifier and a second time information identifier, wherein the second TCI state identifier is used to indicate the first TCI state among multiple TCI states indicated by MAC CE, and the second time information identifier is used to indicate first time information among multiple pieces of time information indicated by MAC CE.

33. The network device of claim 27, wherein the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

34. The network device of claim 33, wherein in case that the beam indication information is the second MAC CE or the second RRC message, the beam indication information comprises any of the following:
the first TCI state, first time information, and the second TCI state, wherein the first time information is used to indicate the effective time of the first TCI state;
a fourth combination identifier, wherein the fourth combination identifier is used to indicate a fourth target combination among multiple fourth combinations, any fourth combination comprises two TCI states and one piece of time information, and the fourth target combination comprises the first TCI state, first time information, and the second TCI state; and
a third TCI state identifier, a fourth TCI state identifier, and a third time information identifier, wherein the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

35. The network device of claim 33, wherein the second DCI comprises any of the following:
the first TCI state, first time information, and the second TCI state, wherein the first time information is used to indicate the effective time of the first TCI state;
a fifth combination identifier, wherein the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination comprises two TCI states and one piece of time information, and the fifth target combination comprises the first TCI state, first time information, and the second TCI state;
a sixth combination identifier, wherein the sixth combination identifier is used to indicate a sixth target combination among multiple sixth combinations, the multiple sixth combinations are combinations composed of multiple TCI states and multiple pieces of time information indicated by MAC CE, any sixth combination comprises two TCI states and one piece of time information, and the sixth target combination comprises the first TCI state, first time information, and the second TCI state; and
a fifth TCI state identifier, a fourth time information identifier, and a sixth TCI state identifier, wherein the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

36. The network device of claim 32 or 35, wherein the first time information is any of the following:
the effective time of the first TCI state; and
a second delay, wherein the second delay is a delay between a receiving time of a physical downlink control channel (PDCCH) scheduling a physical downlink shared channel (PDSCH) and the effective time of the first TCI state;
a third delay, wherein the third delay is a delay between a receiving time of a physical downlink shared channel (PDSCH) and the effective time of the first TCI state; and
a fourth delay, wherein the fourth delay is a delay between a transmitting time of a physical uplink control channel (PUCCH) and the effective time of the first TCI state.

37. A terminal, comprising a memory, a transceiver, and a processor, wherein
the memory is used for storing a computer program; the transceiver is used for transmitting and receiving data under control of the processor; and the processor is used for reading the computer program stored in the memory and performing the following operations:
receiving beam indication information transmitted from a network device, wherein the beam indication information is used to indicate to perform, based on a target beam, signal transmission from a second time; and
based on the beam indication information, performing signal transmission based on the target beam from the second time, wherein the second time is no later than a first time of the target beam.

38. The terminal of claim 37, wherein the first time is the predicted time of the target beam, and the second time is the effective time of the target beam.

39. The terminal of claim 38, wherein the beam indication information indicates at least one or more of:
a first transmission configuration indicator (TCI) state, wherein the first TCI state is used to indicate the target beam;
an effective time of a first transmission configuration indicator (TCI) state, wherein the effective time of the first TCI state is used to indicate the second time; or
a second transmission configuration indicator (TCI) state, wherein the second TCI state is used to indicate a beam for signal transmission at a current time.

40. The terminal of claim 39, wherein the beam indication information indicates the first TCI state; and receiving the beam indication information transmitted from the network device comprises:
receiving the beam indication information transmitted from the network device at a third time, wherein the third time is earlier than the first time, and a duration between the third time and the first time is an effective duration required to indicate the target beam.

41. The terminal of claim 39, wherein the beam indication information indicates the first TCI state and the effective time of the first TCI state; and the beam indication information is any of the following:|
a first media access control-control element (MAC CE);
first downlink control information (DCI); and
a first radio resource control (RRC) message.

42. The terminal of claim 41, wherein in case that the beam indication information is the first MAC CE or the first RRC message, the beam indication information comprises any of the following:
the first TCI state and first time information, wherein the first time information is used to indicate the effective time of the first TCI state;
a first combination identifier, wherein the first combination identifier is used to indicate a first target combination among multiple first combinations, any first combination comprises one TCI state and one piece of time information, and the first target combination comprises the first TCI state and first time information; and
a first TCI state identifier and a first time information identifier, wherein the first TCI state identifier is used to indicate the first TCI state among multiple TCI states, and the first time information identifier is used to indicate first time information among multiple pieces of time information.

43. The terminal of claim 42, wherein the first time information is any of the following:
the effective time of the first TCI state; and
a first delay, wherein the first delay is a delay between a receiving time of the terminal receiving the first MAC CE and the effective time of the first TCI state.

44. The terminal of claim 41, wherein the first DCI comprises any of the following:
the first TCI state and first time information, wherein the first time information is used to indicate the effective time of the first TCI state;
a second combination identifier, wherein the second combination identifier is used to indicate a second target combination among multiple second combinations, wherein the multiple second combinations are combinations indicated by an MAC CE among multiple combinations, the multiple combinations are combinations composed of multiple TCI states and multiple pieces of time information, any second combination comprises one TCI state and one piece of time information, and the second target combination comprises the first TCI state and first time information;
a third combination identifier, wherein the third combination identifier is used to indicate a third target combination among multiple third combinations, the multiple third combinations are combinations of multiple TCI states and multiple pieces of time information indicated by MAC CE, any third combination comprises one TCI state and one piece of time information, and the third target combination comprises the first TCI state and first time information; and
a second TCI state identifier and a second time information identifier, wherein the second TCI state identifier is used to indicate the first TCI state among multiple TCI states indicated by MAC CE, and the second time information identifier is used to indicate first time information among multiple pieces of time information indicated by MAC CE.

45. The terminal of claim 39, wherein the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

46. The terminal of claim 45, wherein in case that the beam indication information is the second MAC CE or the second RRC message, the beam indication information comprises any of the following:
the first TCI state, first time information, and the second TCI state, wherein the first time information is used to indicate the effective time of the first TCI state;
a fourth combination identifier, wherein the fourth combination identifier is used to indicate a fourth target combination among multiple fourth combinations, any fourth combination comprises two TCI states and one piece of time information, and the fourth target combination comprises the first TCI state, first time information, and the second TCI state; and
a third TCI state identifier, a fourth TCI state identifier, and a third time information identifier, wherein the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

47. The terminal of claim 45, wherein the second DCI comprises any of the following:
the first TCI state, first time information, and the second TCI state, wherein the first time information is used to indicate the effective time of the first TCI state;
a fifth combination identifier, wherein the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination comprises two TCI states and one piece of time information, and the fifth target combination comprises the first TCI state, first time information, and the second TCI state;
a sixth combination identifier, wherein the sixth combination identifier is used to indicate a sixth target combination among multiple sixth combinations, the multiple sixth combinations are combinations composed of multiple TCI states and multiple pieces of time information indicated by MAC CE, any sixth combination comprises two TCI states and one piece of time information, and the sixth target combination comprises the first TCI state, first time information, and the second TCI state; and
a fifth TCI state identifier, a fourth time information identifier, and a sixth TCI state identifier, wherein the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

48. The terminal of claim 44 or 47, wherein the first time information is any of the following:
the effective time of the first TCI state; and
a second delay, wherein the second delay is a delay between a receiving time of a physical downlink control channel (PDCCH) scheduling a physical downlink shared channel (PDSCH) and the effective time of the first TCI state;
a third delay, wherein the third delay is a delay between a receiving time of a physical downlink shared channel (PDSCH) and the effective time of the first TCI state; and
a fourth delay, wherein the fourth delay is a delay between a transmitting time of a physical uplink control channel (PUCCH) and the effective time of the first TCI state.

49. An apparatus for beam indication, comprising:
a determining module, used for determining a target beam of a first time; and
a transmitting module, used for transmitting beam indication information to a terminal based on the target beam of the first time, wherein the beam indication information is used to indicate to perform, based on the target beam, signal transmission from a second time, and the second time is no later than the first time.

50. The apparatus of claim 49, wherein the first time is the predicted time of the target beam, and the second time is the effective time of the target beam.

51. The apparatus of claim 50, wherein the beam indication information indicates at least one or more of:
a first transmission configuration indicator (TCI) state, wherein the first TCI state is used to indicate the target beam;
an effective time of a first transmission configuration indicator (TCI) state, wherein the effective time of the first TCI state is used to indicate the second time; or
a second transmission configuration indicator (TCI) state, wherein the second TCI state is used to indicate a beam for signal transmission at a current time.

52. The apparatus of claim 51, wherein the beam indication information indicates the first TCI state; and the transmitting module is used for:
determining an effective duration required to indicate the target beam; and
based on the effective duration and the target beam of the first time, transmitting the beam indication information to the terminal at a third time, wherein the third time is earlier than the first time, and a duration between the third time and the first time is the effective duration.

53. The apparatus of claim 51, wherein the beam indication information indicates the first TCI state and the effective time of the first TCI state; and the beam indication information is any of the following:|
a first media access control-control element (MAC CE);
first downlink control information (DCI); and
a first radio resource control (RRC) message.

54. The apparatus of claim 53, wherein in case that the beam indication information is the first MAC CE or the first RRC message, the beam indication information comprises any of the following:
the first TCI state and first time information, wherein the first time information is used to indicate the effective time of the first TCI state;
a first combination identifier, wherein the first combination identifier is used to indicate a first target combination among multiple first combinations, any first combination comprises one TCI state and one piece of time information, and the first target combination comprises the first TCI state and first time information; and
a first TCI state identifier and a first time information identifier, wherein the first TCI state identifier is used to indicate the first TCI state among multiple TCI states, and the first time information identifier is used to indicate first time information among multiple pieces of time information.

55. The apparatus of claim 54, wherein the first time information is any of the following:
the effective time of the first TCI state; and
a first delay, wherein the first delay is a delay between a receiving time of the terminal receiving the first MAC CE and the effective time of the first TCI state.

56. The apparatus of claim 53, wherein the first DCI comprises any of the following:
the first TCI state and first time information, wherein the first time information is used to indicate the effective time of the first TCI state;
a second combination identifier, wherein the second combination identifier is used to indicate a second target combination among multiple second combinations, wherein the multiple second combinations are combinations indicated by an MAC CE among multiple combinations, the multiple combinations are combinations composed of multiple TCI states and multiple pieces of time information, any second combination comprises one TCI state and one piece of time information, and the second target combination comprises the first TCI state and first time information;
a third combination identifier, wherein the third combination identifier is used to indicate a third target combination among multiple third combinations, the multiple third combinations are combinations of multiple TCI states and multiple pieces of time information indicated by MAC CE, any third combination comprises one TCI state and one piece of time information, and the third target combination comprises the first TCI state and first time information; and
a second TCI state identifier and a second time information identifier, wherein the second TCI state identifier is used to indicate the first TCI state among multiple TCI states indicated by MAC CE, and the second time information identifier is used to indicate first time information among multiple pieces of time information indicated by MAC CE.

57. The apparatus of claim 51, wherein the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

58. The apparatus of claim 57, wherein in case that the beam indication information is the second MAC CE or the second RRC message, the beam indication information comprises any of the following:
the first TCI state, first time information, and the second TCI state, wherein the first time information is used to indicate the effective time of the first TCI state;
a fourth combination identifier, wherein the fourth combination identifier is used to indicate a fourth target combination among multiple fourth combinations, any fourth combination comprises two TCI states and one piece of time information, and the fourth target combination comprises the first TCI state, first time information, and the second TCI state; and
a third TCI state identifier, a fourth TCI state identifier, and a third time information identifier, wherein the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

59. The apparatus of claim 57, wherein the second DCI comprises any of the following:
the first TCI state, first time information, and the second TCI state, wherein the first time information is used to indicate the effective time of the first TCI state;
a fifth combination identifier, wherein the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination comprises two TCI states and one piece of time information, and the fifth target combination comprises the first TCI state, first time information, and the second TCI state;
a sixth combination identifier, wherein the sixth combination identifier is used to indicate a sixth target combination among multiple sixth combinations, the multiple sixth combinations are combinations composed of multiple TCI states and multiple pieces of time information indicated by MAC CE, any sixth combination comprises two TCI states and one piece of time information, and the sixth target combination comprises the first TCI state, first time information, and the second TCI state; and
a fifth TCI state identifier, a fourth time information identifier, and a sixth TCI state identifier, wherein the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

60. The apparatus of claim 56 or 59, wherein the first time information is any of the following:
the effective time of the first TCI state; and
a second delay, wherein the second delay is a delay between a receiving time of a physical downlink control channel (PDCCH) scheduling a physical downlink shared channel (PDSCH) and the effective time of the first TCI state;
a third delay, wherein the third delay is a delay between a receiving time of a physical downlink shared channel (PDSCH) and the effective time of the first TCI state; and
a fourth delay, wherein the fourth delay is a delay between a transmitting time of a physical uplink control channel (PUCCH) and the effective time of the first TCI state.

61. An apparatus for beam indication, comprising:
a receiving module, used for receiving beam indication information transmitted from a network device, wherein the beam indication information is used to indicate to perform, based on a target beam, signal transmission from a second time; and
a processing module, used for, based on the beam indication information, performing signal transmission based on the target beam from the second time, wherein the second time is no later than a first time of the target beam.

62. The apparatus of claim 61, wherein the first time is the predicted time of the target beam, and the second time is the effective time of the target beam.

63. The apparatus of claim 62, wherein the beam indication information indicates at least one or more of:
a first transmission configuration indicator (TCI) state, wherein the first TCI state is used to indicate the target beam;
an effective time of a first transmission configuration indicator (TCI) state, wherein the effective time of the first TCI state is used to indicate the second time; or
a second transmission configuration indicator (TCI) state, wherein the second TCI state is used to indicate a beam for signal transmission at a current time.

64. The apparatus of claim 63, wherein the beam indication information indicates the first TCI state; and the receiving module is further used for:
receiving the beam indication information transmitted from the network device at a third time, wherein the third time is earlier than the first time, and a duration between the third time and the first time is an effective duration required to indicate the target beam.

65. The apparatus of claim 63, wherein the beam indication information indicates the first TCI state and the effective time of the first TCI state; and the beam indication information is any of the following:|
a first media access control-control element (MAC CE);
first downlink control information (DCI); and
a first radio resource control (RRC) message.

66. The apparatus of claim 65, wherein in case that the beam indication information is the first MAC CE or the first RRC message, the beam indication information comprises any of the following:
the first TCI state and first time information, wherein the first time information is used to indicate the effective time of the first TCI state;
a first combination identifier, wherein the first combination identifier is used to indicate a first target combination among multiple first combinations, any first combination comprises one TCI state and one piece of time information, and the first target combination comprises the first TCI state and first time information; and
a first TCI state identifier and a first time information identifier, wherein the first TCI state identifier is used to indicate the first TCI state among multiple TCI states, and the first time information identifier is used to indicate first time information among multiple pieces of time information.

67. The apparatus of claim 66, wherein the first time information is any of the following:
the effective time of the first TCI state; and
a first delay, wherein the first delay is a delay between a receiving time of a terminal receiving the first MAC CE and the effective time of the first TCI state.

68. The apparatus of claim 65, wherein the first DCI comprises any of the following:
the first TCI state and first time information, wherein the first time information is used to indicate the effective time of the first TCI state;
a second combination identifier, wherein the second combination identifier is used to indicate a second target combination among multiple second combinations, wherein the multiple second combinations are combinations indicated by an MAC CE among multiple combinations, the multiple combinations are combinations composed of multiple TCI states and multiple pieces of time information, any second combination comprises one TCI state and one piece of time information, and the second target combination comprises the first TCI state and first time information;
a third combination identifier, wherein the third combination identifier is used to indicate a third target combination among multiple third combinations, the multiple third combinations are combinations of multiple TCI states and multiple pieces of time information indicated by MAC CE, any third combination comprises one TCI state and one piece of time information, and the third target combination comprises the first TCI state and first time information; and
a second TCI state identifier and a second time information identifier, wherein the second TCI state identifier is used to indicate the first TCI state among multiple TCI states indicated by MAC CE, and the second time information identifier is used to indicate first time information among multiple pieces of time information indicated by MAC CE.

69. The apparatus of claim 63, wherein the beam indication information indicates the first TCI state, the effective time of the first TCI state, and the second TCI state; and the beam indication information is any of the following:
a second media access control-control element (MAC CE);
second downlink control information (DCI); and
a second radio resource control (RRC) message.

70. The apparatus of claim 69, wherein in case that the beam indication information is the second MAC CE or the second RRC message, the beam indication information comprises any of the following:
the first TCI state, first time information, and the second TCI state, wherein the first time information is used to indicate the effective time of the first TCI state;
a fourth combination identifier, wherein the fourth combination identifier is used to indicate a fourth target combination among multiple fourth combinations, any fourth combination comprises two TCI states and one piece of time information, and the fourth target combination comprises the first TCI state, first time information, and the second TCI state; and
a third TCI state identifier, a fourth TCI state identifier, and a third time information identifier, wherein the third TCI state identifier is used to indicate the first TCI state among multiple TCI states, the fourth TCI state identifier is used to indicate the second TCI state among multiple TCI states, and the third time information identifier is used to indicate first time information among multiple pieces of time information.

71. The apparatus of claim 69, wherein the second DCI comprises any of the following:
the first TCI state, first time information, and the second TCI state, wherein the first time information is used to indicate the effective time of the first TCI state;
a fifth combination identifier, wherein the fifth combination identifier is used to indicate a fifth target combination among multiple fifth combinations, the multiple fifth combinations are combinations indicated by an MAC CE among multiple combinations, the multiple combinations are combinations composed of multiple TCI states and multiple pieces of time information, any fifth combination comprises two TCI states and one piece of time information, and the fifth target combination comprises the first TCI state, first time information, and the second TCI state;
a sixth combination identifier, wherein the sixth combination identifier is used to indicate a sixth target combination among multiple sixth combinations, the multiple sixth combinations are combinations composed of multiple TCI states and multiple pieces of time information indicated by MAC CE, any sixth combination comprises two TCI states and one piece of time information, and the sixth target combination comprises the first TCI state, first time information, and the second TCI state; and
a fifth TCI state identifier, a fourth time information identifier, and a sixth TCI state identifier, wherein the fifth TCI state identifier is used to indicate the first TCI state among multiple TCI states, the fourth time information identifier is used to indicate first time information among multiple pieces of time information, and the sixth TCI state identifier is used to indicate the second TCI state among multiple TCI states.

72. The apparatus of claim 68 or 71, wherein the first time information is any of the following:
the effective time of the first TCI state; and
a second delay, wherein the second delay is a delay between a receiving time of a physical downlink control channel (PDCCH) scheduling a physical downlink shared channel (PDSCH) and the effective time of the first TCI state;
a third delay, wherein the third delay is a delay between a receiving time of a physical downlink shared channel (PDSCH) and the effective time of the first TCI state; and
a fourth delay, wherein the fourth delay is a delay between a transmitting time of a physical uplink control channel (PUCCH) and the effective time of the first TCI state.

73. A computer-readable storage medium, wherein the computer-readable storage medium stores a computer program, and the computer program is used to cause a computer to perform the method for beam indication of any of claims 1 to 12, or the computer program is used to cause a computer to perform the method for beam indication of any of claims 13 to 24.
